**Europäisches Patentamt**

**European Patent Office**

**Office européen des brevets**

(11) Publication number: **0 144 599**
**B1**

# EUROPEAN PATENT SPECIFICATION

(45) Date of publication of patent specification: **28.03.90**

(21) Application number: **84111873.0**

(22) Date of filing: **04.10.84**

(51) Int. Cl.⁵: **G 11 B 15/60, G 11 B 15/64, G 11 B 15/43**

(54) Air bearing tape support for guiding tape and sensing tape tension.

(30) Priority: **02.12.83 US 557571**

(43) Date of publication of application:
**19.06.85 Bulletin 85/25**

(45) Publication of the grant of the patent:
**28.03.90 Bulletin 90/13**

(84) Designated Contracting States:
**DE FR GB**

(56) References cited:
**EP-A-0 040 464**
**FR-A-1 265 042**
**US-A-3 375 963**

**IBM TECHNICAL DISCLOSURE BULLETIN, vol. 25, no. 1, June 1982, New York, US; R. ANDRESEN et al.: "Tape tension control"**

(73) Proprietor: **International Business Machines Corporation**
**Old Orchard Road**
**Armonk, N.Y. 10504 (US)**

(72) Inventor: **Callender, Bernard Lowell**
**8264 E. Galinda Drive**
**Tucson Arizona 85715 (US)**
Inventor: **Chow, William Wai-Chung**
**10553 Speedway**
**Tucson Arizona 85748 (US)**
Inventor: **Osterday, Thomas George**
**9665 East Barrudean Hills**
**Tucson Arizona 85748 (US)**
Inventor: **Rueger, William John**
**126 E. Mountain Morning Drive**
**Tucson Arizona 85704 (US)**

(74) Representative: **Johansson, Lars E. et al**
**IBM Svenska AB Intellectual Property Department 4-01**
**S-163 92 Stockholm (SE)**

## Description

This invention relates to an air bearing tape support in a tape drive which is capable of simultaneously guiding the tape over a tape path while sensing tape tension.

Data processing systems have traditionally utilized magnetic tape as a data storage medium. The magnetic tape is wound and rewound between reels in a reel-to-reel tape drive and guided past a read-write head by bearings which provide an interface of forced air with the magnetic tape to lower friction forces between the tape and bearing surface and which permit rapid acceleration and deceleration of the magnetic tape. Since information is stored on the magnetic tape in a very dense format, it is necessary that the tape path be accurately controlled so as to provide accurate data writing and reading.

Three functions that a reel-to-reel tape drive must provide are: sensing tension in the tape; buffering or decoupling the tape at the magnetic head from any perturbations arising at the reels; and, reliably guiding the tape along the tape path. In conventional reel-to-reel tape drives, a separate station is required to accomplish each of these three functions. That is, a first apparatus senses tape tension, a second apparatus decouples the tape at the head from any perturbations arising at the reels, and a third apparatus guides the tape along the tape path. It would be most desirable in a reel-to-reel tape drive to have one station perform all of the these three required functions. Not only would such a station significantly decrease the cost of a reel-to-reel tape drive but it would also result in a more reliable tape drive having a single field replaceable unit instead of three field replaceable units. Additionally, using a single station over which the magnetic tape must pass substantially reduces the tendency for tape vibrations.

The use of a pressure transducer in a reel-to-reel tape drive to determine tape tension is known in the prior art. See for instance the article "Tape tension control" by R. Andresen et al, published in IBM Technical Disclosure Bulletin, Vol. 25, no. 1, June 1982, New York, U.S. The tape is passed around an arcuate surface having apertures through which a gaseous medium can be supplied to provide a supporting gaseous cushion between the tape and the arcuate surface. The arcuate surface has one or more sense ports over which the tape passes. A pressure measuring device is connected with the sense ports for determining the pressure between the tape and the arcuate surface. Since tape tension is directly proportional to the pressure measured by the sense ports, the tension on the tape can be readily determined.

However, two problems arise which are not addressed by this prior art. The first problem arises when contaminants clog the sense port so that the pressure between tape and arcuate surface cannot be determined. The second problem arises as a result of vibratory movement of the tape across the arcuate surface. When tape vibrations occur, the distance between tape and sense port can change dramatically with an attendant loss in accuracy of pressure and hence tension measured. Additionally, the vibrating tape can come in contact with the sense port shutting it off and thus rendering the sense port useless as a pressure measuring device. The vibrations are induced by disturbances which are generated at the take-up reel in the tape drive. Tape vibration has a frequency of 100 cycles per second or higher whereas disturbance is irregular and has a frequency below 100 cycles per second.

From EP—A—0040464 a solution is known, having airflow in the sensing line, which, however could disturb correct pressure sensing.

As a result, it would be most desirable to provide a pressure measuring transducer having the ability to measure tape tension in the presence of contaminants. It would also be desirable to control tape vibratory motion by preventing disturbances at the take-up reel from inducing vibrations at the arcuate surface of the pressure transducer. This would enable more accurate measurement of the pressure existing between the moving tape and the arcuate surface around which the tape is passed. To accomplish these results, a purging means is provided for clearing a sense port of contaminants. Additionally, a guiding flange is provided which positively guides the tape in the tape drive while greatly reducing the vibratory motion of the tape.

Accordingly, it is an object of this invention to provide an improved reel-to-reel tape drive.

Another object of this invention is to provide a reel-to-reel tape drive wherein the functions of guiding, decoupling, and tension sensing are accomplished using a single tape drive station and still another object is to provide a reel-to-reel tape drive wherein a guiding flange provides positive guiding of the tape while simultaneously decoupling the tape from the tape reels so as to maintain tape vibration.

These objects are achieved by a tape drive as defined in the appended claim.

The present invention relates to a tape support in a reel-to-reel tape drive which provides guiding of the tape, sensing of tape tension, and disturbance decoupling between the take-up reel and bearings which guide the tape over the read-write head. This tape support is connected to a solid state sensing transducer which is able to determine tape tension from the pressure measured between the tape and the surface of the tape support around which the tape passes.

A port in the surface of the tape support around which the tape passes is used to sense the pressure between the tape and the surface of the tape support. A sense line is connected between the port and the solid state sensing transducer. This sense line communicates the pressure measured at the port to the solid state sensing transducer. There is no air flow in this sense line. The compacting of air molecules within the sense line reflects the pressure sensed at the port. The compaction of air molecules provides to the solid state sensing transducer a measure of the pressure sensed at the port.

A purge line is located at the port end of the sense line. This purge lines provides a continuous air flow out of the sense line. The tape support has a plenum through which air under pressure is directed. Apertures in the surface of the tape support allow this air to be directed over half of the surface of the tape support so as to provide an air cushion over which the tape passes. This air cushion is known in the art as a hydrostatic air bearing, and the surface over which the tape passes is known as an air bearing surface. The air bearing surface extends only over half of the tape support.

The purge line is connected to the same source of pressured air which provides the air bearing. Thus, as long as air is being provided under pressure through the apertures in the tape support, the purge time will also be operational to clear contaminants from the sense port. The continuous flow of air from the purge line out through the sense port reduces the possibility of the tape getting stuck on the sense port due to a vacuum in the sense line. If the tape were to become stuck on the sense port by a vacuum in the sense line, no more pressure sensing would be possible until the tape were removed form the sense port. If the tape seals the sense port for other reasons, such as high tape tension or sticking caused by friction, the purge line will increase pressure within the sense line to a maximum level. This increased pressure trips a tension error sensor in the solid state sensing transducer.

The tape support has a substantially cylindrical shape. The tape is passed along the arcuate surface of this substantially cylindrical tape support. Affixed to the top and bottom ends of the tape support are flanges which act to guide the tape. Each of the flanges is composed of two semidisk-shaped halves which are joined together so as to form one disk-shaped member. One half of the disk-shaped member has a thickness which is less than the thickness of the other half of the disk-shaped member. The thinner section of the disk-shaped member is located on the half of the tape support which has the air bearing surface over which the tape passes. The reduced thickness of the flanges on the air bearing side of the tape support forms vents so that the air from the apertures in the air bearing surface can escape and the edge of the tape will not be in contact with the flanges.

The vertical spacing between the top and bottom flanges on the air bearing side of the tape support is somewhat wider then the width of the tape. On the air bearing side of the tape support, the tape is free from vertical edge guiding. All vertical edge guiding occurs at the points where the flanges are thicker and the tape is not supported by an air bearing, i.e. where the two semidisk-shaped members are joined.

The invention will now be more closely described with reference to the accompanying drawings where:

Fig. 1 is an illustration of a reel-to-reel magnetic tape drive according to the present invention;

Fig. 2 is an enlarged view of the tape support assembly according to the present invention.

Fig. 3a is a sectional view of the tape guiding apparatus of the tape support assembly and

Fig. 3b is a top view of a tape guiding flange shown in sectional view in Fig. 3a.

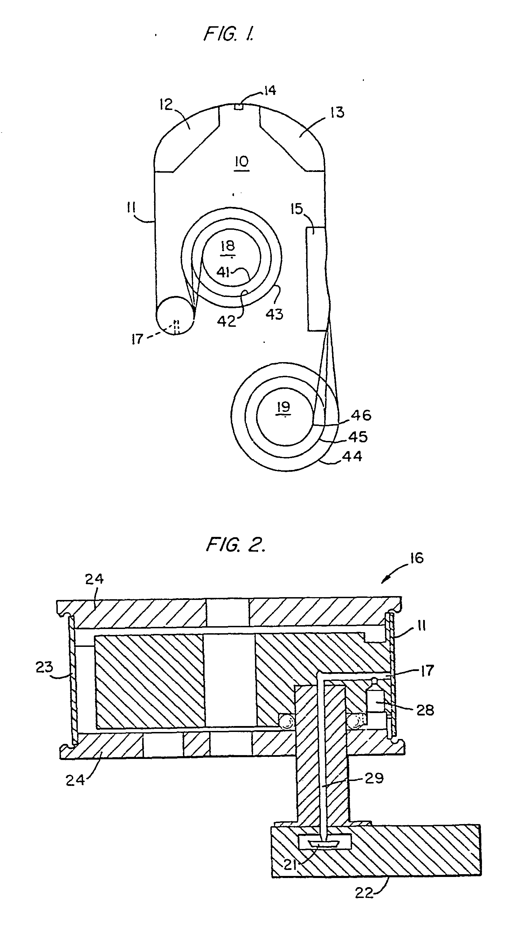

Referring to Fig. 1, magnetic tape 11 is unwound from supply reel 19, traverses past read bearing 12, write bearing 13, magnetic head 14, decoupler column 15, tape support 16, and is wound onto take-up reel 18. Tape support 16 has a sense port 17 for determining the pressure existing between tape 11 and tape support 16. The tension on magnetic tape 11 can then be determined based upon the pressure sensed. As shown in Fig. 1, take-up reel 18 and supply reel 19 change diameter as the tape drive 10 is operated. When supply reel 19 is first loaded into tape drive 10, it has a diameter represented by circle 44. At this time, take-up reel 18 has a diameter represented by circle 41. As the operation of tape drive 10 continues, supply reel 19 has a diameter represented by circle 45 and take-up reel 18 has a diameter represented by circle 42. Finally, at the conclusion of a drive operation, supply reel 19 has a diameter represented by circle 46 and take-up reel 18 has a diameter represented by circle 43. Thus, all of tape 11 has been unwound from supply reel 19 and rewound onto take-up reel 18. As can be seen in Fig. 1, the angles that tape 11 makes with decoupler column 15 and tape support 16 change during the operation of tape drive 10.

As further shown in Fig. 1, the wrap angle that tape 11 makes around tape support 16 is on the order of 180° with slight changes due to changes in reel diameter as heretofore explained. Having a wrap angle of this magnitude minimizes the influence of take-up reel 18 on tape 11 at read bearing 12. As a result, the possible vibrations of tape 11 at read bearing 12 induced by disturbances at take-up reel 18 are substantially reduced. The possible vibrations of tape 11 at write bearing 13 induced by disturbances at supply reel 19 are reduced by decoupler column 15.

The tension on tape 11 is equal to the pressure sensed by port 17 multiplied by the width of tape 11 multiplied by the air bearing radius. The air bearing radius includes the radius of tape support 16 as well as the distance between the air bearing surface of the tape support 16 and the surface of tape 11. As can be seen from this relationship, the tension on tape 11 is directly proportional to the pressure sensed by sense port 17.

The structure and operation of tape support 16 will now be presented in more detail using Fig. 2. As can be seen, tape support 16 has a substantially cylindrical configuration. Solid state sensing transducer 22 is inserted into a cavity in the bottom side of tape support 16. Sense line 29 extends from silicon crystal 21 within transducer 22 into the body of tape support 16 and terminates at sense port 17. Silicon crystal 21 produces an output proportional to the air pressure sensed at port 17. Purge line 28 provides a flow of air out of sense port 17 thus preventing contaminants from clogging the opening of port 17. There is no air flow from purge line 28 down sense line 29 towards silicon crystal 21. The compacting of air molecules within sense line 29 reflects the pressure sensed at port 17.

The operation of solid state transducer 22, sense line 29, and sense port 17 is similar to a flapper valve. Tape 11 is analogous to the flapper while sense port 17 is analogous to the nozzle in a flapper valve. The major difference between a standard flapper valve and the operation detailed herein is that there is an air flow to solid state transducer 22.

In operation, solid state sensing transducer 22 is first calibrated putting a known amount of tension on tape 11. Transducer 22 produces an output voltage which is proportional to the gain of transducer 22 multiplied by the air pressure measured at sense port 17, plus an offset voltage dependent upon the transducer 22. Once transducer 22 has been calibrated, then the output voltage of transducer 22 will provide a direct indication of the pressure existing at sense port 17 and hence the tension on tape 11. By performing the calibration in this manner, the output voltage of transducer 22 can be used to directly determine the tension on tape 11. The values of the pressure sensed at port 17, the width of tape 11, and the radius of tape support 16 will all be subsumed in the output voltage of transducer 22. Thus in order to determine the tension on tape 11, it will only be necessary to measure the output voltage of transducer 22.

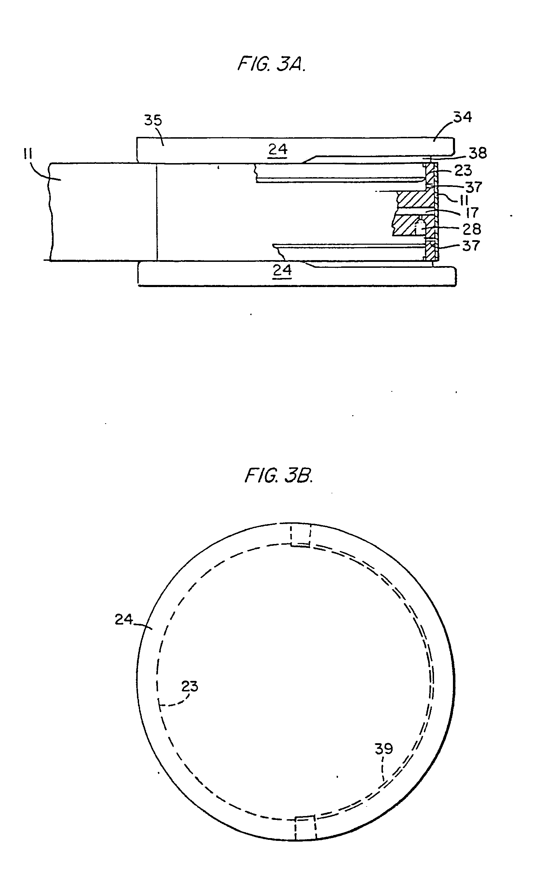

Arcuate surface 23 forms the air bearing surface over which tape 11 passes. Small apertures 37 (Fig. 3a) in arcuate surface 23 allow air under pressure to be forced out through apertures 37 so as to provide an air cushion over which tape 11 travels. Apertures 37 are located in only half of arcuate surface 23. This will be explained in greater detail with relation to Fig. 3a. The creation of such an air bearing surface is well known in the art and need not be detailed herein. Purge line 28 is connected to the same supply of pressurized air which creates the air bearing surface. As long as an air bearing surface is created by the expelling of air through apertures 37 in arcuate surface 23, purge line 28 will be effective to force contaminants out of the opening of sense port 17. The air flowing out of sense port 17 will also prevent tape 11 from collapsing on port 17 due to a vacuum within sense line 29. Such a vacuum would prevent the operation of solid state tension transducer 22.

Flanges 24 are affixed to the top and bottom ends of tape support 16. A more detailed explanation of their structure will be presented in relation to Figs. 3a and 3b. Flanges 24 help guide tape 11 over arcuate surface 23. Without flanges 24, tape 11 would become skewed with respect to arcuate surface 23 and could under appropriate circumstances allow tape 11 to move away from sense port 17 so that the tension on tape 11 could not be measured. Referring now to Fig. 3a, flanges 24 each comprises a first semidisk-shaped member 34 as well as a second semidisk-shaped member 35 joined together. The thickness of members 34 is less than the thickness of members 35. Apertures 37 and hence the air bearing are located in the half of arcuate surface 23 which is adjacent to the thinner sections of flanges 24, i.e., adjacent to members 34. The reduced thickness of members 34 forms vents 38 between arcuate surface 23 and members 34. Vents 38 allow air from apertures 37 in arcuate surface 23 to escape and as a result prevent the edges of tape 11 from contacting members 34. This reduces edge wear on tape 11. As an additional aid to reducing edge wear on tape 11, the distance between members 34 is somewhat greater than the width of tape 11. Vents 38 also reduce disturbance induced vibration in tape 11.

The greater thickness of members 35 constrains tape 11 and forces it to be guided by the portion of arcuate surface 23 between members 34. The only places where tape 11 contacts flanges 24 is where members 34 and 35 are joined. Thus, these are the only places where vertical edge guiding of tape 11 occurs. Lip 39, shown in Fig. 3b, mates with arcuate surface 23 and forms a portion of vents 38.

As is well known, one end of tape 11 is affixed to a leader block (not shown) which is wider than tape 11 and also wider than the distance between members 34. The leader block facilitates load and unload operations. During load and unload operations, no air bearing exists in arcuate surface 23. Members 34 of flanges 24 prevent the leader blocks from crashing and/or dragging on the air bearing portion of arcuate surface 23.

It will be noted especially that although air has been described as creating the interface between tape and tape guiding surface, any appropriate gaseous medium may be used to create a gaseous cushion over which the tape travels.

**Claim**

A tape drive including a substantially cylindrical tape support (16) having an arcuate surface around which a tape (11) is passed, said arcuate surface having a plurality of apertures therein through which a gaseous medium can be supplied under pressure for supporting said tape on a gaseous cushion, said tape drive comprising:

a port (17) in said arcuate surface for sensing gaseous pressure between said tape and said arcuate surface,

a solid state sensing transducer (22) operatively coupled to the port via a sense line (29) extending from said port (17) to the solid state sensing transducer (21) for communicating to the solid state sensing transducer the gaseous pressure sensed at the port, characterized by means for improving the pressure sensing conditions at the port, including

an additional aperture (28) for the gaseous medium located in the sense line adjacent to the port, such that said medium is flowing out of the port, but substantially no medium is flowing in the sense line (29), and

first and second flanges (24) affixed to the top and bottom ends, respectively, of said substantially cylindrical tape support (16), said first and second flanges (24) each comprising a first semidisk-shaped section (34), and a second semidisk-shaped section (35) joined to said first semidisk-shaped section, thereby forming a substantially disk-shaped member, the first semidisk-shaped section (34) having a thickness less than the thickness of the second semidisk-shaped section (35), thereby forming vents (38) between the first semidisk-shaped section and the arcuate surface through which the gaseous medium flows.

## Patentanspruch

Bandlaufwerk mit einem im wesentlichen zylindrischen Bandträger (16) mit einer gekrümmten Oberfläche, um die herum ein Band (11) geführt ist, wobei besagte gekrümmte Oberfläche mehrere Öffnungen besitzt, durch die ein gasartiges Medium unter Druck angelegt werden kann, um besagtes Medium auf einem Gaskissen zu halten, wobei besagtes Bandlaufwerk enthält:

einen Anschluß (17) in besagter gekrümmter Oberfläche, um den Gasdruck zwischen besagtem Band und besagter gekrümmter Oberfläche abzutasten,

einen transistorbestückten Meßwandler (22), der im Betrieb über eine Abtastleitung (29), die aus besagtem Anschluß (17) vorsteht, mit dem transistorbestückten Meßwandler (21) verbunden ist, um dem transistorbestückten Meßwandler den am Anschluß abgegriffenen Druck mitzuteilen, gekennzeichnet durch:

Mittel für die Verbesserung des Gasabtastdruckzustandes am Anschluß, darunter

eine zusätzliche Öffnung (28) für das gesartige Medium in der Abtastleitung neben dem Anschluß, so daß besagtes Medium aus dem Anschluß ausströmt, aber so, daß im wesentlichen kein Medium in die Abtastleitung (29) strömt, und

erste und zweite Flansche (24), am oberen bzw. unteren Ende des besagten, im wesentlichen zylindrischen Bandträgers (16) angebracht, wobei besagte erste und zweite Flansche (24) jeweils einen ersten, halbkreisförmigen Abschnitt (34) und einen zweiten, halbkreisförmigen Abschnitt (35) enthalten, der mit dem besagten ersten halbkreisförmigen Abschnitt verbunden ist und dadurch ein im wesentlichen kreisförmiges Glied bildet, wobei der erste halbkreisförmige Abschnitt (34) eine geringere Dicke aufweist als der zweite halbkreisförmige Abschnitt (35), so daß Luftlöcher (38) zwischen dem ersten halbkreisförmigen Abschnitt und der gekrümmten Oberfläche gebildet werden, durch die das gesartige Medium fließt.

## Revendication

Mécanisme d'entraînement de bande comprenant un support de bande sensiblement cylindrique (16) ayant une surface courbe autour de laquelle on fait passer une bande (11), la surface courbe ayant une pluralité l'ouvertures au travers desquelles un gaz peut être fourni sous pression pour porter la bande sur un coussin gazeux, le mécanisme d'entraînement de bande comprenant:

un accès (17) dans la surface courbe pour détecter la pression gazeuse entre la bande et la surface courbe,

un transducteur de détection à semiconducteur (22) couplé opérativement à l'accès par l'intermédiaire d'une conduite de détection (29) s'étendant à partir de l'accès (17) jusqu'au transducteur de détection à semiconducteur (21) pour communiquer au transducteur de détection à semiconducteur la pression gazeuse détectée au niveau de l'accès,

caractérisé par des moyens pour améliorer les conditions de détection de la pression au niveau de l'accès, comprenant:

une ouverture supplémentaire (28) pour le gaz située dans la conduite de détection de façon adjacente à l'accès, de sorte que le gaz est expulsé hors de l'accès, mais que sensiblement aucun gaz ne s'écoule dans la conduite de détection (29), et

des premier et deuxième flasques (24) fixés aux extrémités supérieure et inférieure, respectivement, du support de bande sensiblement cylindrique (16), les premier et deuxième flasques (24) comprenant chacun une première partie en forme de demi-disque (34) et une deuxième partie en forme de demi-disque (35) unie à la première partie en forme de demi-disque, formant ainsi un élément ayant sensiblement une forme de disque, la première partie en forme de demi-disque (34) ayant une épaisseur inférieure à l'épaisseur de la deuxième partie en forme de demi-disque (35), formant ainsi des évents (38) entre la première partie en forme de demi-disque et la surface courbe au travers desquels le gaz s'écoule.

FIG. 1.

FIG. 2.

## FIG. 3A.

## FIG. 3B.